# EUROPEAN PATENT SPECIFICATION

(11) **EP 0 611 229 B1**
(45) Date of publication and mention of the grant of the patent: **11.06.1997**
(21) Application number: 94420031.0
(22) Date of filing: 02.02.1994
(51) Int. Cl.: F16F 15/30

(54) **Improved flywheel for coating rolls**
Schwungrad für Auftragswalzen
Volant modifié pour rouleaux de revêtement

(30) Priority: 11.02.1993 US 16345
(43) Date of publication of application: 17.08.1994
(73) Proprietor: EASTMAN KODAK COMPANY, Rochester, New York 14650-2201 (US)
(72) Inventor: Finnicum, Douglas Scott, c/o EASTMAN KODAK COMPANY, Rochester, New York 14650-2201 (US); Peters, Jack Duane, c/o EASTMAN KODAK COMPANY, Rochester, New York 14650-2201 (US); Le, Son Minh, c/o EASTMAN KODAK COMPANY, Rochester, New York 14650-2201 (US); Finucane, Lawrence J., c/o EASTMAN KODAK COMPANY, Rochester, New York 14650-2201 (US)
(74) Representative: Buff, Michel

(56) References cited:
- DE-C- 113 416
- DE-U- 7 219 981
- GB-A- 1 379 595
- GB-A- 2 172 687

## Description

### Field of the Invention

The present invention relates to an apparatus which damps natural vibrations of a rotary shaft.

### Background of the Invention

In the coating process known as bead coating and described in U.S. patent 2,761,791, multiple liquid layers flow down a slide hopper and are deposited on a moving web supported by a coating roll. In this process, the hopper lip is in close proximity to the moving web. In the space between the hopper lip and the web, a liquid bridge is formed. This liquid bridge is extremely sensitive to spacing changes. Vibration of the coating roll dynamically changes the spacing between the coating roll and the hopper lip. These spacing changes in turn cause nonuniform coatings to be made. The vibration of the coating roll is routinely detected in the uniformity of products coated using the bead coating process.

A flywheel attached to a coating roll has been found to provide assistance in maintaining a constant speed and a reduction in the largest vibration of the coating roll. It has also been shown that without a flywheel, a coating roll exhibits a single natural frequency mode. Installation of a standard flywheel creates two natural frequency modes which have lower amplitudes than the single natural frequency mode found without a flywheel. The addition of the flywheel does not increase the damping of the coating roll since the amplitude of the two smaller peaks is approximately equal to the amplitude of the single peak. It has also been shown that the relative heights of each peak can be adjusted by adding or removing weight to the flywheel, but their total amplitude always equals the amplitude of the single peak.

The present invention is a device which damps the vibrational energy of a coating roll and thereby reduces the total vibrational amplitude of the coating roll.

DE-U-72,19981 discloses an apparatus for damping vibrations relative to an axis but solves only in part, the above mentioned problems.

The present invention is an apparatus for damping vibrations relative to an axis of a rotating or stationary member. The apparatus includes a first plate element, a second plate element, and a means for fixing the first and second plate elements to the rotating or stationary member at locations along and transverse to the axis of the rotating or stationary member. Relative rotation between the member and the first and second plate elements about the axis is prevented. At least one layer of damping material is captured between and contacts each of the first and second plate elements. A means is provided for compressing said layer of damping material between said first and second plate elements whereby radial and axial movement of said member relative to said axis causes the plate elements to flex and deform the layer of damping material to thereby damp the axial and radial vibrations of the member, said apparatus being characterized in that at least one annular ring element is positioned between the first and second plate elements wherein a first layer of the damping material is compressed between the first plate element and the annular ring element and a second layer of damping material is compressed between the second plate element and the annular ring element.

### Brief Description of the Drawings

Figure 1 shows a side view of a bead coating zone.

Figure 2 shows a cross-sectional view of the flywheel of the present invention.

Figure 3 shows a side view of the flywheel of the present invention.

Figure 4 shows a schematic of a coating roller including a prior art flywheel.

Figure 5 shows a schematic of a coating roller including a flywheel of the present invention.

Figures 6 (a)-(d) show the frequency response of a coating roller with; 6(a) no flywheel; 6(b) a 72 pound prior art flywheel; 6(c) a 120 pound prior art flywheel; and 6(d) with a 160 pound prior art flywheel.

Figures 7 (a)-(c) show the time response characteristics of a coating roller with; 7(a) no flywheel; 7(b) a prior art flywheel; and 7(c) a flywheel of the present invention.

Figures 8 (a)-(c) show the frequency response characteristics of the coating roller with; 8(a) no flywheel; 8(b) a prior art flywheel; and 8(c) a flywheel of the present invention.

Figure 9 shows a cross-sectional view of an alternate embodiment of a flywheel of the present invention.

Figure 10 shows a side view of an alternate embodiment of the flywheel of the present invention.

Figure 11 shows a cross-sectional view of an alternate embodiment of a flywheel of the present invention.

Figure 12 shows a side view of an alternate embodiment of a flywheel of the present invention.

Figure 13 shows a cross-sectional view of an alternate embodiment of the flywheel of the present invention.

Figure 14 shows a side view of an alternate embodiment of the flywheel of the present invention.

For a better understanding of the present invention, together with other and further advantages and capabilities thereof, reference is made to the following disclosure and appended claims in connection with the above-described drawings.

### Detailed Description of the Preferred Embodiment

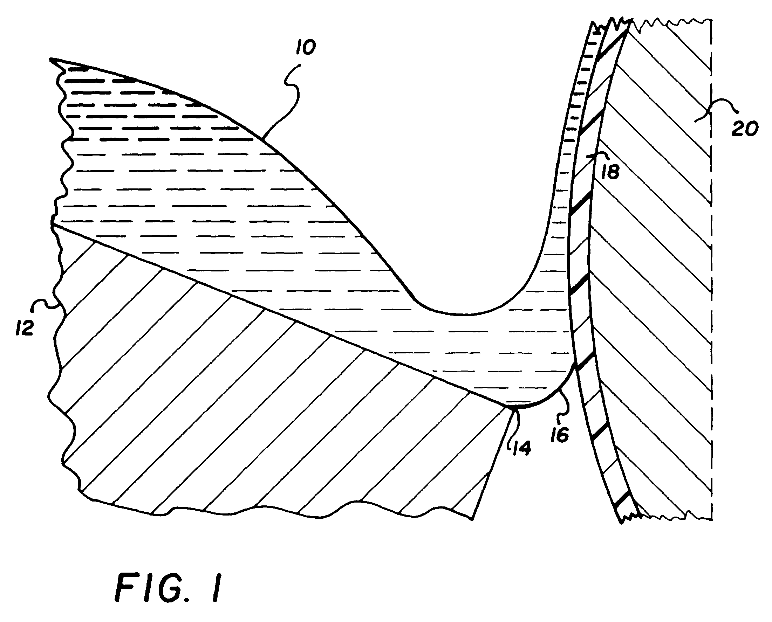

A bead coating process is shown in Figure 1. The coating liquid 10 flows down the slide hopper 12 to the hopper lip 14. The coating liquid 10 is deposited onto a moving web 18 supported by a coating roller 20. A liquid bridge 16 is formed between the hopper lip and the moving web 18. It is this liquid bridge that makes bead coating so sensitive to spacing changes. A 4% coating thickness variation is expected for every 0.001 inch spacing variation. Typically, the space between the hopper lip and the web is from approximately 0.005 inches to about 0.020 inches. Due to the close proximity around the coating bead or liquid bridge 16, the spacing between the hopper lip and the moving web cannot be monitored dynamically while coating a product. However, it has been shown that hopper lip spacing changes produce fluctuations in the coated product which can be monitored.

Shown in Figure 1 is a coating roller 20. For purposes of the present invention a coating roller has the following characteristics; a diameter of about 2 inches to about 10 inches; a weight of about 60 to about 300 pounds; and a a length of about 20 inches to about 100 inches. Although the flywheel of the present invention is described using a coating roller, the flywheel will work to dampen vibrations from any rotating member.

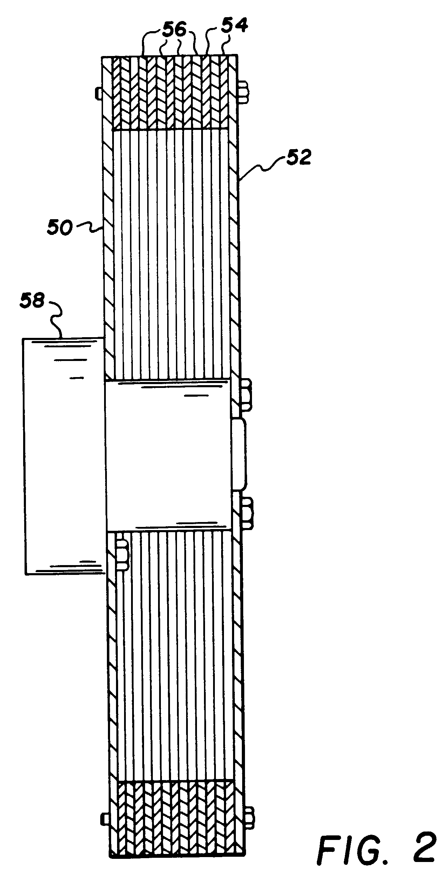

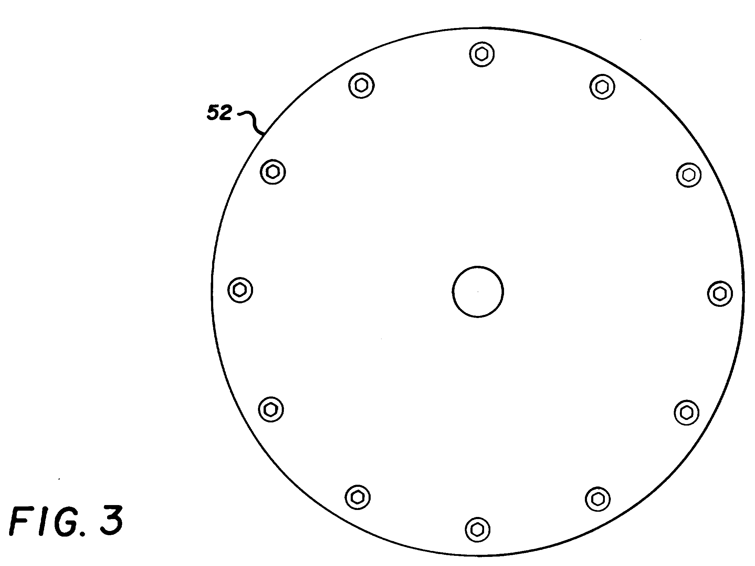

Shown in Figures 2 and 3 are a cross-sectional view and a side view of the flywheel of the present invention. The flywheel includes an inner plate 50, and outer plate 52 and sandwiched between the two plates 50 and 52, are alternating rings 56 of conventional hard body material and rings 54 of conventional vibration damping material. The flywheel is attached to the coating roll outside the bearing mounting block by collar 58. The structure of the flywheel is designed such that the axial movement of the inner and outer plates relative to each other works to compress and expand the damping material 54 sandwiched between the two plates 50 and 52. This compression and expansion of the damping material results in the absorption and dissipation **o**f axial vibrational energy. Thus, vibrational energy of the coating roll that results in axial movement between the two plates is absorbed and dissipated. The net effect of using this damped flywheel is to reduce the axial and radial vibrations of the coating roll. The torsional vibration of the coating roll is not dampened. This leads to more uniform coating since the variation of the spacing between the coating roll and the coating lip is decreased.

The flywheel plates 50, 52 and alternating rings 56 can be manufactured from any solid body material such as metal or plastic. The preferred material for the plates and alternating rings is stainless steel or aluminum. The damping material can be any vibration damping material. The preferred material, available from E.A.R. Division of Cabot Corporation, is a viscoelastic polymer. The damping material used in the flywheels was ISODAMP® C-1002-25.

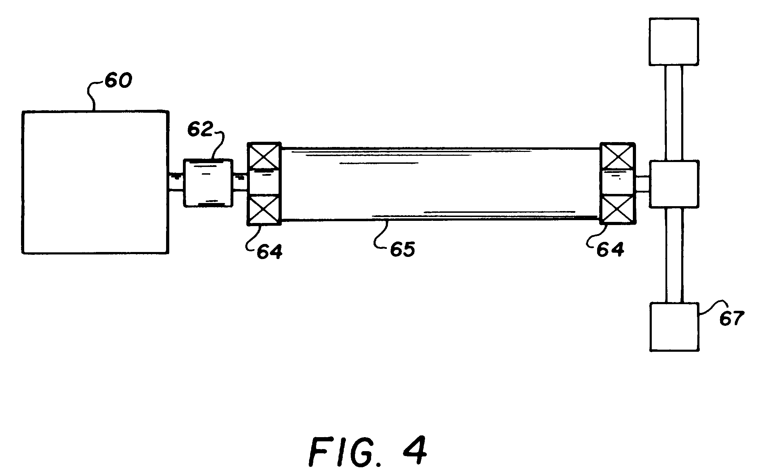

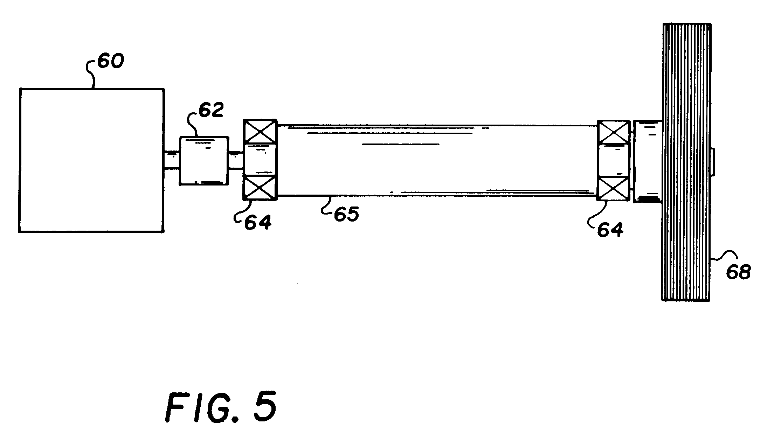

The following experiments were run on the flywheel of the present invention and compared with data obtained from prior art flywheels. The flywheel of the present invention ranged in diameter from 10 inches to 40 inches. The approximate weight was 100 pounds. The number of alternating rings of hard body material (aluminum) and damping material (ISODAMP® C-1002-25) varied from 7 to 13 although one layer of damping material will provide some vibrational damping. The results show that the flywheel of the present invention reduces vibrational energy and thereby damps the coating roll. The experimental set up is shown in Figures 4 and 5. A coating roller motor 60 attached to a flexible coupling 62 couples the coating roller motor 60 to the coating roller 65. The coating roller is supported by ball bearing supports 64 at each end. Figure 4 shows the prior art flywheel 67 attached to the coating roller outside one of the ball bearing supports 64. Figure 5 shows the flywheel 68 of the present invention attached to the coating roller 65 outside one of the ball bearing supports 64.

A Bruel and Kjaer 8202 Impact Hammer was used as the source of force for excitation on the coating roller. The hammer was coupled to a Bruel and Kjaer type 2626 Conditioning Amplifier. Sensitivity was determined to be 4.45 milli-volts for each pound of input force. Response of the coating roller was measured with an Accumeasure 1000 non-contact displacement system manufactured by Mechanical Technology, Inc. The Accumeasure system included an AS-1021-PA amplifier coupled to an ASP-10-CTA capacitance probe. The sensitivity was determined to be 1000 volts for each inch of movement. Total movement range was limited to 0.01 inches based on the capabilities of the capacitance probe. Data was collected and analyzed using a Hewlett-Packard 3562A Dynamic Signal Analyzer. Static bump tests were performed on the roll module with the flywheels attached. From the input force and output response measurements, frequency response and coherence were calculated using the HP 3562A DSA.

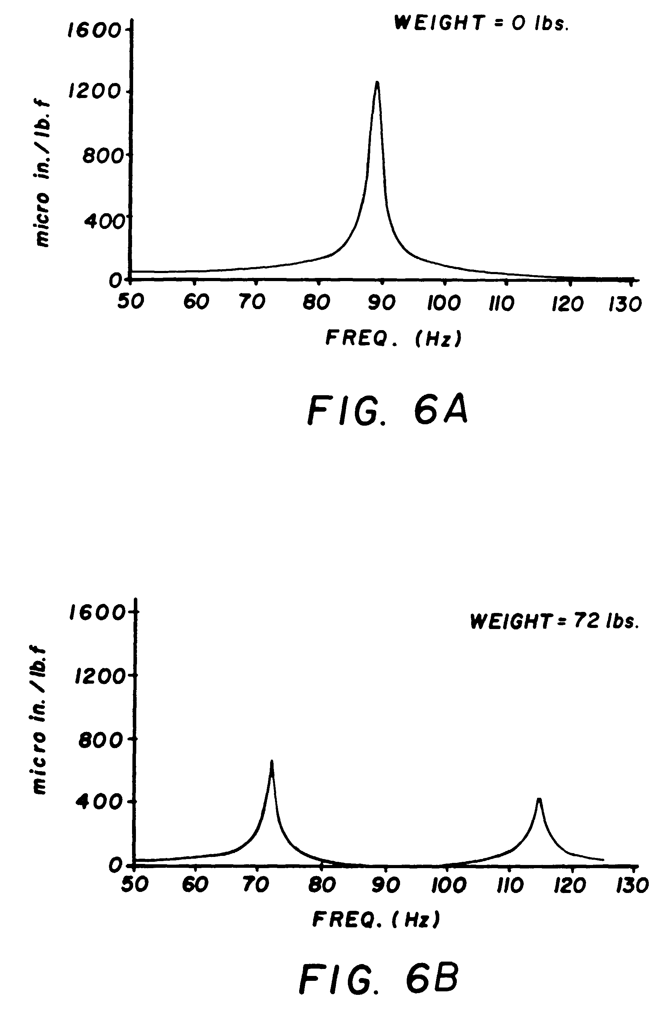

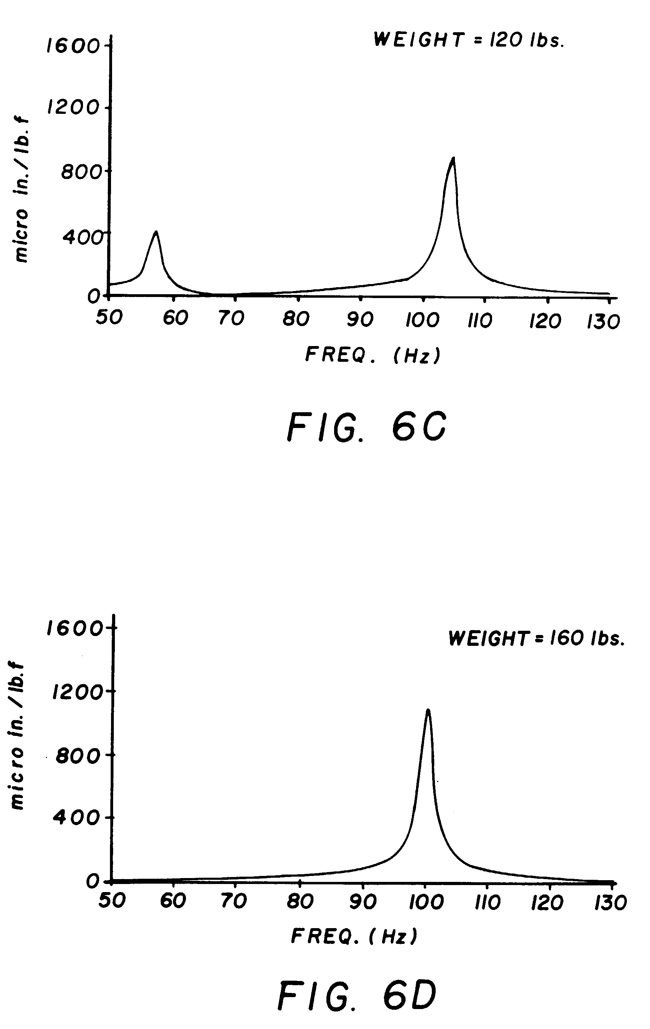

A series of tests were run on prior art flywheels with the flywheel weights varied from 0 to 162 pounds. The prior art flywheel was of perimeter mass design and constructed from steel. The standard prior art flywheel weighed 102 pounds and this weight was varied using attachable steel plates as the perimeter mass. The hammer test results for four weights is shown in Figure 6 (a)-(d) for the frequency range of 50 - 130 Hz. At 0 pounds i.e. no flywheel, the frequency response of the coating roll contains only one peak at 88 Hz. However, as weight was added to the flywheel, a second natural appeared in the frequency range of interest. In addition as the weight increased in the flywheel, the amplitude of the second natural rose at the expense of the first till at the highest weight studied of 160 pounds only the second natural is observed.

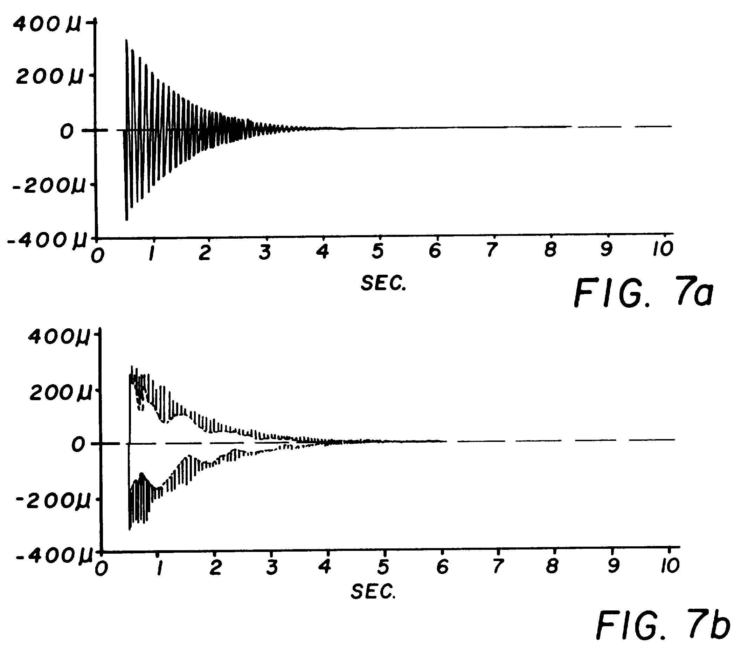

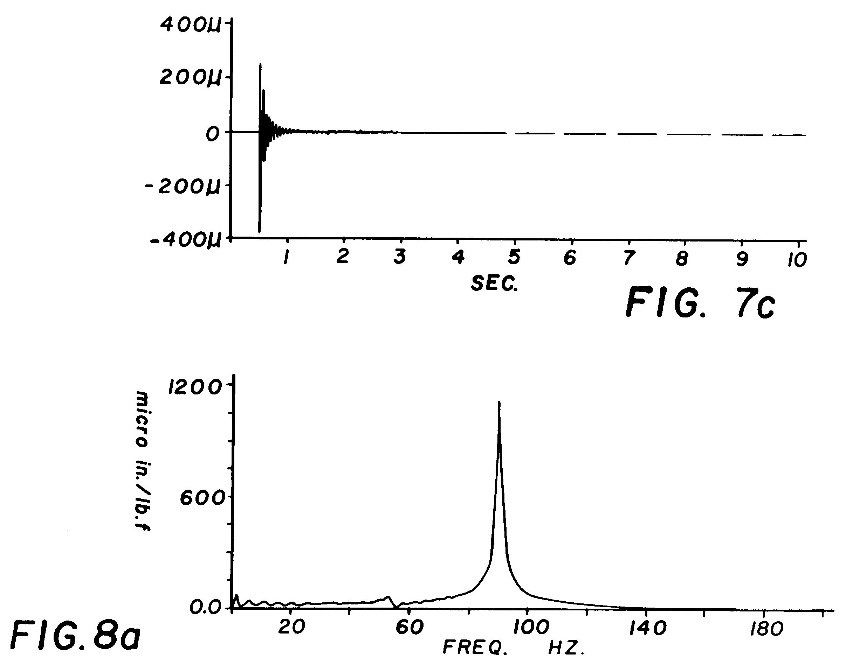

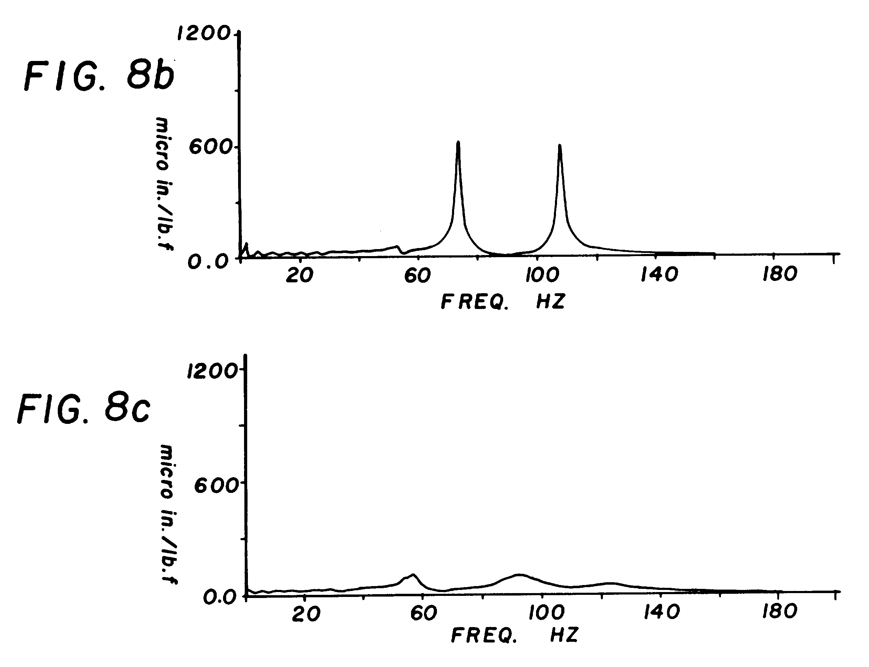

When tests were run on the flywheel of the present invention as shown in Figures 2 and 3, wherein the flywheel included viscoelastic rings sandwiched between anodized aluminum rings and capture plates, the following results were observed. Figures 7(a)-(c) show the time response characteristics of the coating roller. Figure 7(a) shows the response when the coating roller has no flywheel, 7(b) shows the response with a 102 lb. prior art flywheel and 7(c) shows the response with a flywheel of the present invention. Figures 7(a)-(c) show the movement of the coating roll in microinches as a function of time. The responses of Figures 7(a)-(c) were transformed by the equipment previously mentioned to yield the frequency response shown in Figures 8(a)-(c).

Graph 8(a) shows a frequency response of a coating roller with no flywheel attached. The middle spectrum 8(b) shows a frequency response of the coating roller with a prior art steel flywheel of 102 pounds attached. It shows two frequency modes at 75.2 Hz with an amplitude of 600 microinches per pound force and at 108.75 Hz with an amplitude of 585 microinches per pound force. Finally, the lower spectrum 8(c) is a frequency response of the coating roller module with the flywheel of the present invention. It has three frequency modes of 56.75 Hz with an amplitude of 160 microinches per pound force, 92 Hz with an amplitude of 104 microinches per pound force, and at 119 Hz with an amplitude of 51 microinches per pound force. Although there is an additional mode there is a reduction in amplitude of approximately 6 to 1 over the old style flywheel.

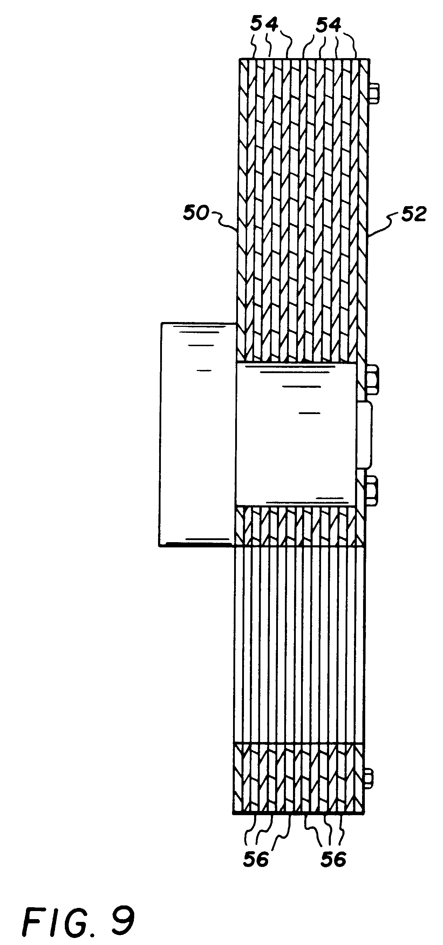

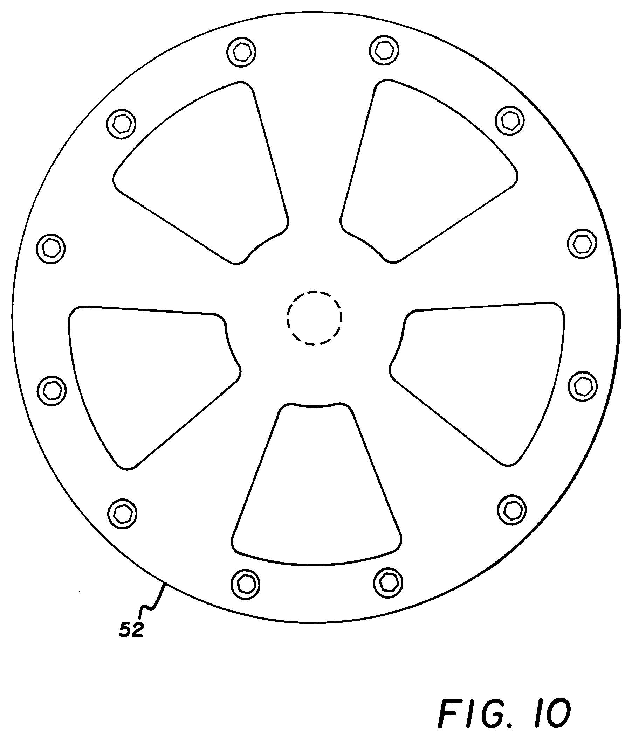

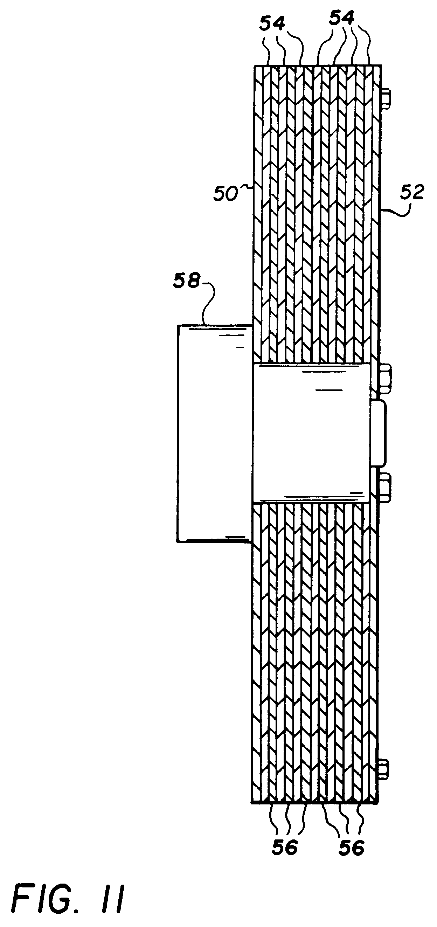

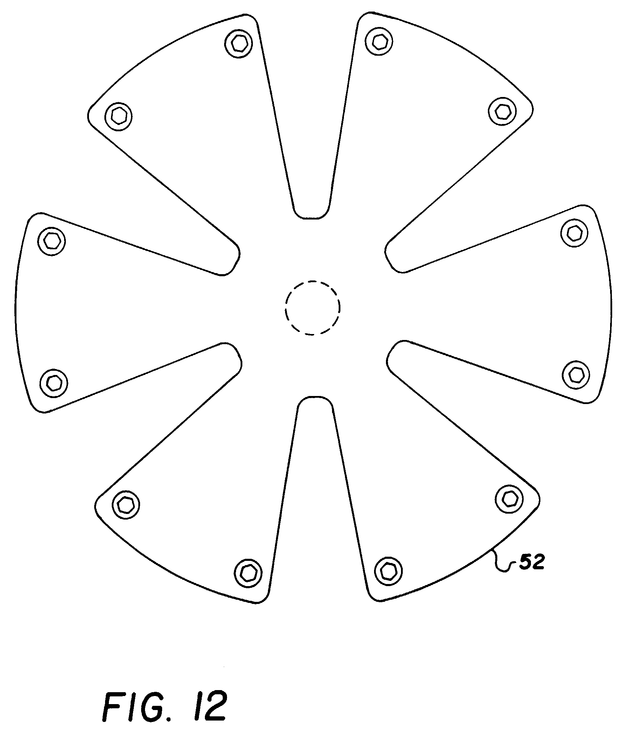

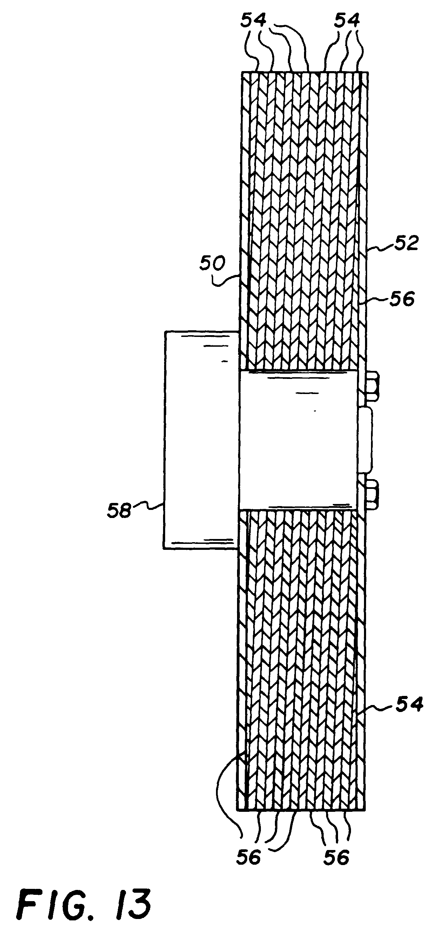

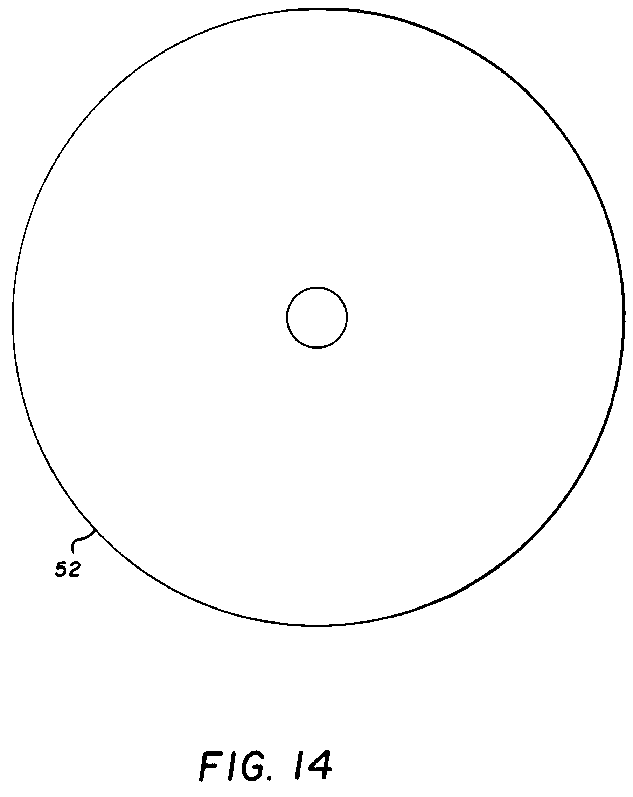

Figures 9 and 10 show an alternate design of the flywheel of the present invention. In this embodiment, the plates used are of a different shape than that shown in Figure 3. Likewise, Figures 11 and 12 show another design of the flywheel of the present invention. Figures 13 and 14 show yet another design of the flywheel of the present invention. In this embodiment the damping material 54 and ring 56 are constructed in a spiral.

While there has been shown what are presently considered to be the preferred embodiments of the invention various modifications and alterations will be obvious to those skilled in the art. All such modifications are intended to fall within the scope of the appended claims.

## Claims

1. Apparatus for damping vibrations relative to an axis of rotating or stationary member, comprising:
a first plate element (50);
a second plate element (52);
means (58) for fixing said plate elements to said member at locations along and transverse to said axis and for preventing relative rotation between said member and said plate elements about said axis;
at least two layers (54) of damping material captured between and contacting each of said plate elements; and
means for compressing said layer of damping material between said plate elements, whereby radial and axial movement of said member relative to said axis causes said plate elements (50, 52) to flex and deform said layers (54) of damping material to damp said vibrations ;
characterized in that it further comprises at least one annular plate element (56) positioned between said first and second plate elements (50, 52), wherein a first layer (54) of said damping material is compressed between said first plate element (50) and said annular plate element (56) and a second layer of damping material is compressed between said second plate element (52) and said annular plate element (56).

2. Apparatus according to Claim 1, wherein said annular plate element (56) is prevented from relative rotation by said means for fixing.

3. Apparatus according to Claim 1, wherein said at least one annular plate element (56) comprises a ring.

4. A coating roll assembly comprising;
a coating roll (65);
a motor (60) coupled to said coating roll for rotating said coating roll along an axis;
a flywheel (67) for damping vibrations comprising;
a first plate element (50);
a second plate element (52);
means (58) for fixing said plate elements to said coating roll at locations transverse to said axis and for preventing relative rotation between said member and said plate elements about said axis;
at least two layers of damping material (54) captured between and contacting each of said plate elements whereby radial and axial movement of said member relative to said axis cause said plate elements to flex and deform said layer of damping material (54) to damp said vibrations.
characterized in that it further comprises at least one annular plate element (56) positioned between said first and second plate elements, wherein a first layer of said damping material is compressed between said first plate element (50) and said annular plate element (56) and a second layer of damping material is compressed between said second plate element (52) and said annular plate element (56).

5. Apparatus according to Claim 4, wherein said at least one annular plate element (56) comprises a ring.

## Patentansprüche

1. Vorrichtung zum Dämpfen von Schwingungen bezüglich einer Achse einer drehbaren oder ortsfesten Einrichtung, mit
einem ersten Plattenelement (50),
einem zweiten Plattenelement (52),
einem Mittel (58), das die Plattenelemente an der Einrichtung an Punkten befestigt, die sich entlang der Achse und quer dazu befinden, und das eine relative Drehung zwischen der Einrichtung und den Plattenelementen um die Achse verhindert,
mindestens zwei Schichten (54) eines dämpfenden Materials, das zwischen den Plattenelementen vorgesehen ist und mit jedem der Plattenelemente in Berührung steht, und
Mitteln, die die Schicht aus dämpfendem Material zwischen den Plattenelementen zusammendrücken, wobei eine radiale und axiale Bewegung der Einrichtung relativ zur Achse bewirkt, daß die Plattenelemente (50, 52) sich biegen und daß sie die Schichten (54) aus dämpfendem Material derart deformieren, daß die Schwingungen dämpfbar sind,
**dadurch gekennzeichnet**, daß mindestens ein zwischen dem ersten und dem zweiten Plattenelement (50, 52) angeordnetes kreisringförmiges Plattenelement (56) vorgesehen ist und daß eine erste Schicht (54) aus dämpfendem Material zwischen dem ersten Plattenelement (50) und dem kreisringförmigen Plattenelement (56) sowie eine zweite Schicht aus dämpfendem Material zwischen dem zweiten Plattenelement (52) und dem kreisringförmigen Plattenelement (56) zusammendrückbar ist.

2. Vorrichtung nach Anspruch 1, dadurch gekennzeichnet, daß das Befestigungsmittel eine relative Drehung des kreisringförmigen Plattenelements (56) verhindert.

3. Vorrichtung nach Anspruch 1, dadurch gekennzeichnet, daß das mindesten eine kreisringförmige Plattenelement (56) eine ringförmige dämpfende Schicht aufweist.

4. Beschichtungsrollenanordnung mit
einer Beschichtungsrolle (65),
einem mit der Beschichtungsrolle gekoppelten Motor (60) zum Drehen der Beschichtungsrolle entlang einer Achse,
einem Schwungrad (67) zum Dämpfen von Schwingungen, mit
einem ersten Plattenelement (50),
einem zweiten Plattenelement (52),
einem Mittel (58), das die Plattenelemente an der Beschichtungsrolle an Punkten befestigt, die sich quer zur Achse befinden, und das eine relative Drehung zwischen der Einrichtung und den Plattenelementen um die Achse verhindert, und
mindestens zwei Schichten (54) eines dämpfenden Materials, das zwischen den Plattenelementen vorgesehen ist und mit jedem der Plattenelemente in Berührung steht, wobei eine radiale und axiale Bewegung der Einrichtung relativ zur Achse bewirkt, daß die Plattenelemente sich biegen und daß sie die Schicht aus dämpfendem Material (54) derart deformieren, daß die Schwingungen dämpfbar sind,
**dadurch gekennzeichnet**, daß mindestens ein zwischen dem ersten und dem zweiten Plattenelement angeordnetes kreisringförmiges Plattenelement (56) vorgesehen ist und daß eine erste Schicht aus dämpfendem Material zwischen dem ersten Plattenelement (50) und dem kreisringförmigen Plattenelement (56) sowie eine zweite Schicht aus dämpfendem Material zwischen dem zweiten Plattenelement (52) und dem kreisringförmigen Plattenelement (56) zusammendrückbar ist.

5. Beschichtungsrollenanordnung nach Anspruch 4, dadurch gekennzeichnet, daß das mindesten eine kreisringförmige Plattenelement (56) eine ringförmige dämpfende Schicht aufweist.

## Revendications

1. Dispositif destiné à amortir les vibrations d'un élément tournant ou stationnaire par rapport à un axe, comprenant :
un premier élément en plaque (50),
un second élément en plaque (52),
un moyen (58) destiné à fixer lesdits éléments en plaque audit élément en des emplacements situés le long dudit axe et transversalement à celui-ci, et à empêcher une rotation relative entre ledit élément et lesdits éléments en plaque autour dudit axe,
au moins deux couches (54) de matériau d'amortissement retenues entre lesdits éléments en plaque et en contact avec chacun de ceux-ci, et
des moyens destinés à comprimer ladite couche de matériau d'amortissement entre lesdits éléments en plaque, d'où il s'ensuit que le mouvement radial et axial dudit élément par rapport audit axe amène lesdits éléments en plaque (50, 52) à fléchir et à déformer lesdites couches (54) de matériau d'amortissement afin d'amortir lesdites vibrations,
caractérisé en ce qu'il comprend en outre au moins un élément annulaire en plaque (56) positionné entre lesdits premier et second éléments en plaque (50, 52), dans lequel une première couche (54) dudit matériau d'amortissement est comprimée entre ledit premier élément en plaque (50) et ledit élément annulaire en plaque (56), et une seconde couche de matériau d'amortissement est comprimée entre ledit second élément en plaque (52) et ledit élément annulaire en plaque (56).

2. Dispositif selon la revendication 1, dans lequel ledit élément annulaire en plaque (56) est empêché d'effectuer une rotation relative par lesdits moyens de fixation.

3. Dispositif selon la revendication 1, dans lequel ledit au moins un élément annulaire en plaque (56) comprend un anneau.

4. Ensemble de rouleau de couchage comprenant :
un rouleau de couchage (65),
un moteur (60) accouplé audit rouleau de couchage afin de faire tourner ledit rouleau de couchage suivant un axe,
un volant (67) destiné à amortir les vibrations, comprenant :
un premier élément en plaque (50),
un second élément en plaque (52),
un moyen (58) destiné à fixer lesdits éléments en plaque audit rouleau de couchage en des emplacements transversaux par rapport audit axe et destiné à empêcher la rotation relative entre ledit élément et lesdits éléments en plaque autour dudit axe,
au moins deux couches de matériau d'amortissement (54) retenues entre lesdits éléments en plaque et en contact avec chacun de ceux-ci, d'où il s'ensuit que le mouvement radial et axial dudit élément par rapport audit axe amène lesdits éléments en plaque à fléchir et à déformer ladite couche de matériau d'amortissement (54) afin d'amortir lesdites vibrations,
caractérisé en ce qu'il comprend en outre au moins un élément annulaire en plaque (56) positionné entre lesdits premier et second éléments en plaque, dans lequel une première couche dudit matériau d'amortissement est comprimée entre ledit premier élément en plaque (50) et ledit élément annulaire en plaque (56), et une seconde couche de matériau d'amortissement est comprimée entre ledit second élément en plaque (52) et ledit élément annulaire en plaque (56).

5. Dispositif selon la revendication 4, dans lequel ledit au moins un élément annulaire en plaque (56) comprend un anneau.
